Europäisches Patentamt

(19) European Patent Office

Office européen des brevets

(11) Publication number: **0 038 948**
**A2**

(12) # EUROPEAN PATENT APPLICATION

(21) Application number: **81102441.3**

(22) Date of filing: **31.03.81**

(51) Int. Cl.³: **A 01 N 59/24**
//(A01N59/24, 43/40)

(30) Priority: **31.03.80 US 136066**
**16.03.81 US 240485**

(43) Date of publication of application:
**04.11.81 Bulletin 81/44**

(84) Designated Contracting States:
**BE CH DE FR GB IT LI NL SE**

(71) Applicant: **J.T. Baker Chemical Co.**
**222 Red School Lane**
**Phillipsburg, New Jersey 08865(US)**

(72) Inventor: **Stephenson, Larry W.**
**1707 N. Alamo Circle**
**Mesa Arizona 85203(US)**

(74) Representative: **Vossius.Vossius.Tauchner.Heunemann.Rauh**
**Siebertstrasse 4 P.O. Box 86 07 67**
**D-8000 München 86(DE)**

(54) Crop desiccant and defoliant formulation and a process for the desiccation and defoliation of crops.

(57) An improved crop desiccant and defoliant formulation comprises a synergistic mixture of paraquat and an ammonium, quaternary ammonium, alkali metal or alkaline earth metal thiocyanate and process for the desiccation and defoliation of crops in need thereof.

EP 0 038 948 A2

Croydon Printing Company Ltd.

VOSSIUS · VOSSIUS · TAUCHNER · HE

PATENTANWÄLTE

0038948

SIEBERTSTRASSE 4 · 8000 MÜNCHEN 86 · PHONE: (089) 47 40 75
CABLE: BENZOLPATENT MÜNCHEN · TELEX 5-29 453 VOPAT D

Our Ref.: R 092 EP

Case:    B-1059 C-1

2 1. MRZ. 1...

J. T. Baker Chemical Company
Phillipsburg, New Jersey, U.S.A.

Crop Desiccant and Defoliant Formulation and a Process
for the Desiccation and Defoliation of Crops

## FIELD OF THE INVENTION

The invention relates to formulations having improved crop desiccant and defoliant activity and to a process for crop desiccation and defoliation employing the formulations of the invention.

## BACKGROUND OF THE INVENTION

Paraquat, namely 1,1'-dimethyl-4,4'-bipyridinium dichloride, is known as a crop desiccant and defoliant and has been registered for that purpose on cotton and potatoes with the Environmental Protection Agency. It has been necessary to employ at least 0,28 kg per ha   of paraquat cation and generally between 0,28 to 0,84 kg per ha     and most preferably between 0,45 to 0,84 kg per ha     to achieve acceptable levels of desiccation and defoliation. Moreover, in view of the increased environmental awareness it has become necessary to decrease the amount of such active ingredients used per ha    and to reduce as far as possible any undesirable effects that may result from the use of such active ingredients.  Heretofore it has not been possible to reduce the rate of application of paraquat much below 0,28 kg per ha and still obtain acceptable levels of desiccation and defoliation of crops.

Similarly, it has heretofore been known that ammonium thiocyanate has crop desiccant and defoliant activity.

It has, however, generally been necessary to employ at least 5,6 kg   or more of ammonium thiocyanate per ha

of crop to obtain acceptable levels of desiccation and defoliation.

It has therefore been a desirable and necessary objective to develop crop desiccant and defoliant formulations that are more effective and that are effective at much lower levels of active ingredients.

## SUMMARY OF THE INVENTION

It has now been found that a combination of paraquat and an ammonium, quaternary ammonium, alkali metal or alkaline earth metal thiocyanate provides formulations of synergistically improved crop desiccant and defoliant activity.  It has also been discovered that formulations of said active ingredients can be prepared which employ much lower levels of active ingredients than generally heretofore possible.  Additionally, it has been discovered that because of the lower level of active ingredients required per acre of crop that more environmentally acceptable formulations can be provided.

### DETAILED DESCRIPTION OF THE INVENTION

A formulation of this invention contains about 0,006 to about 0,03 g of paraquat cation and from about 0,12 to about 0,96g of thiocyanate compound per ml of formulation. Preferably the amount of paraquat cation employed is from about 0,009 to about 0,018 g per ml and most preferably about 0,012 g per ml of formulation. The thiocyanate compound is preferably present in the formulation in an amount of from about 0,36 to about 0,72g and most preferably about 0,48 g per ml of formulation.

The amount of thiocyanate compound in the formulation in relation to the amount of paraquat cation present will generally be in the weight ratio of from about 10:1 to about 80:1, preferably from about 30:1 to about 60:1 and most preferably about 40:1.

The thiocyanate compound employed in the formulations of this invention may be ammonium thiocyanate, or a quaternary ammonium, alkali metal or an alkaline earth metal thiocyanate. Among the thiocyanates that may be employed there may be mentioned, for example, alkali metal thiocyanates such as sodium and potassium thiocyanate, alkaline earth metal thiocyanates such as magnesium and calcium thiocyanate and quaternary ammonium thiocyanates such as lower alkyl ammonium thiocyanates such as quarternary tertiary butyl ammonium thiocyanate. Especially preferred thiocyanates are ammonium thiocyanate, sodium thiocyanate and magnesium thiocyanate. Most preferred is ammonium thiocyanate.

The formulations of active ingredients dissolved in water can contain one or more of any suitable suspending agents, such as for example, methylcellulose, hydroxypropylmethylcellulose, magnesium hydroxide gel, bentonite, Veegum, attapulgite clays, hydroxypropyl guar, aluminum hydroxide gel and the like. The suspending agents will generally be employed in an amount of from about 5 to about 30% percent by weight based on the weight of the total formulation, and preferably in an amount of from about 15 to about 25% by weight. Aluminum hydroxide gel containing about 2 to about 20% by weight, preferably about 10 to about 15% by weight, aluminum hydroxide is employed as the preferred suspending agent for the formulations of this invention.

Any suitable freeze thaw agent can also be employed in the formulations of this invention, if desired, and is generally present in an amount of from about 1 to about 10% by weight based on the weight of the total formulation. Among such suitable freeze thaw agents there can be mentioned, for example, urea, polyhydric alcohols such as glycerol, sorbitol, mannitol, ethylene glycol, propylene glycol, polyethylene glycol, glucose, sucrose and the like as well as water soluble non-toxic polymeric agents such as dextran, polyvinylpyrrolidone and the like. Preferred for use in the formulations
of this invention is propylene glycol.

Any suitable wetting and dispersing agents may be
used in the formulations of this invention, if desired,
and is generally employed in an amount of from about 1 to
about 6% by weight based on the weight of the total formulation. Exemplary of suitable wetting and dispersing
agents there can be mentioned, for example, non-ionic
aromatic polyethylene glycol ethers, such as Antarox® A-400,
alkyl aryl polyether alcohol type emulsifiers such as
Triton® X-100, sulfonated purified lignins such as Reax®
45A and Reax® 45L and a fine mesh, high viscosity, hydroxypropyl guar such as Jaguar® HP-8 and the like.

Suitable antifoam agents may also be employed, if
desired, and when employed are used in an amount of from
about 0.1 to about 0.5% by weight based on the total
weight of the formulation. Any suitable antifoam agent
can be employed such as, for example, a 50% by weight
solution of 2,4,7,9-tetramethyl-5-decyn-4,7-diol known
as Surfynol® 104-E.

If desired, the formulations of this invention can
also have present other additional substances such as
herbicides, pesticides, insecticides, nematocides, fungicides, and the like; stabilizers, spreaders, deactivators, adhesives, stickers, fertilizers, activators, synergists, and the like. That is, the formulations of the
present invention are also useful when other herbicides, pesticides and/or other defoliants, desiccants, growth
regulants and the like are included in the formulations
heretofore described.  These other materials can comprise
from about 5% to about 95% of the active ingredients in
the formulation.  Other herbicides, pesticides, defoliants,
desiccants and plant growth regulants which can be used
in the formulations of this invention can include chloro-
phenoxy herbicides such as 2,4,5-T, MCPA, MCPB, 4(2,4-DB),
2,4-DEB, 4-CPB, 4-CPA, 4-CPP, 2,4,5-TB' 2,4,5-TES, 3,4-DA,
silvex and the like; carbamate herbicides such as IPC,
CIPC, swep barban, BCPC, CEPC, CPPC, and the like;
thiocarbamate and dithiocarbamate herbicides such as
CDEC, metham sodium, EPTC, diallate, PEBC, perbulate,
vernolate and the like; substituted urea herbicides such as
norea, siduron, dichloral urea, chloroxuron, cycluron,
fenuron, monuron, monuron TCA, diuron, linuron, monolin-
uron, neburon, buturon, trimeturon and the like; symmetrical triazine herbicides such as simazine, chlor-
azine, atratone, desmetryne, norazine, ipazine, prometryn,
trietazine, simetone, prometone, propazine, ametryne and
the like; chloroacetamide herbicides such as alpha-chloro-
N, N-dimethylacetamide, CDEA, CDAA, alpha-chloro-N-iso-
propylacetamide, 2-chloro-N-isopropylacetanilide, 4-
(chloroacetyl)morpholine, 1-(chloroacetyl) piperidine, and
the like; chlorinated aliphatic acid herbicides such as
TCA, dalapon, 2,3-dichloropropionic acid, 2,2,3-TPA and
the like; chlorinated benzoic acid and phenylacetic acid
herbicides such as 2,3,6-TBA, 2,3,5,6-TBA, tricamba, amiben, fenac, PBA, 2-methoxy-3,6-dichlorophenylacetic
acid, 3-methoxy-2,6-dichlorophenylacetic acid, 2-methoxy-
3,5,6-trichlorophenylacetic acid, 2,4-dichloro-3-nitrobenzoic acid, sodium 5-[2-chloro-4-(trifluoromethyl)-
phenoxy]-2-nitrobenzoate and the like; and such compounds
as aminotriazole, maleic hydrazide, phenyl mercuric acetate, endothal, biuret, technical chlordane, dimethyl
2,3,5,6-tetrachloroterephthalate, diquat, erbon, DNC,
DNBP, dichlobenil, DPA, diphenamid, dipropalin, triflur-
alin, solan, dicryl, merphos, DMPA, DSMA, MSMA, potassium azide, acrolein, benefin, bensulide, AMS, bromacil,
2(3,4-dichlorophenyl)-4-methyl-1,2,4-oxadiazolidine-3,
5-dione, bromoxynil, cacodylic acid, CMA, CPMF, cypromid,
DCB, DCPA, dichlone, diphenatril, DMTT, DNAP, EBEP, EXD,
HCA, ioxynil, IPX, isocil, potassium cyanate, MAA, MAMA,
MCPES, MCPP, MH, molinate, NPA, OCH, PCP, picloram, DPA,
PCA, pyrichlor, sesone, terbacil, terbutol, TCBA, brominil,
CP-50144, H-176-1, H-732, M-2901, planavin, sodium tetraborate, calcium cyanamide, DEF, ethyl xanthogen disulfide,
sindone, sindone B, propanil and the like.

Such herbicides and pesticides can also be used in
the formulations of this invention in the form of their
salts, esters, amides and other derivatives whenever applicable to the particular parent compounds.

The formulations of this invention will generally
be applied to crops in need of desiccation and defoliation, such as cotton, potatoes, soybeans and the like, in any desiccating and defoliating amount such as for example, in an amount of from about 0,935 to about 46,75 l, preferably about 2,34 to 9,35 and most preferably about 4,7 l of formulation per ha depending upon the particular crop involved, the concentration of active ingredients in the formulation and other such factors apparent to those skilled in the art.

As examples of formulations according to this invention reference may be had to the following illustrative examples.

### EXAMPLE 1

A formulation was prepared by mixing ammonium thiocyanate dissolved in water with paraquat dissolved in water to give a final composition containing 0,48 g of ammonium thiocyanate and 0,012 g of paraquat cation per ml of formulation. This formulation can be made to a thicker consistency and improved suspension by the addition of 37% by weight aluminum hydroxide gel as a suspending agent and by the addition of appropriate thickening agents such as methyl cellulose, hydroxypropylmethylcellulose or various clays such as bentonite or attapulgite or a hydroxylpropyl guar such as Jaguar® HP-8.

### EXAMPLE 2

A flowable formulation is prepared according to Example 1 but having the following composition:

| Component | Amount |
|---|---|
| Ammonium thiocyanate | 0,48 g/ml |

| Component | Amount |
|-----------|--------|
| Paraquat | 0,012 g/ml (as cation) |
| Aluminum hydroxide gel (10% Al$_2$O$_3$ assay) | 18.0 percent by weight |
| Hydroxypropyl guar - Jaguar® HP-8 | 0.5 percent by weight |
| Water | q.s. |

The unexpected synergistic desiccant and defoliant
activity of the formulations of this invention is illustrated in the following description of a desiccation and
defoliation test undertaken in Macon County, Alabama.
The formulation of Example 2 was applied to cotton of the
DPL 61 variety when the cotton was mature having approximately 60% open bolls. The formulation was applied by
a foliar spray. Application of the formulation was in an
amount sufficient to provide an application rate of 2,24 kg

of ammonium thiocyanate with 0,06 kg      paraquat
cation per ha.   Additionally, identical variety cotton in
the same test plot was identically sprayed with formulations similar to the formulation of Example 2 but having no
paraquat present in the formulation. Spraying of said
other formulations provided test plots with five levels of
only ammonium thiocyanate active ingredient per ha, namely
0,56, 1,12, 2,24, 4,48 and 8,97 kg      of ammonium thiocyanate per ha.   Paraquat is recognized as not having
acceptable desiccant and defoliant activity at levels as low as 0,06 kg      cation per ha     as employed in the test.

The defoliation activity resulting from said tests
twenty-one days after application was as set forth in the
following Table.

TABLE

| Test No. | Treatment | Rate kg a.i./ha | Percent Defoliation |
|---|---|---|---|
| 1 | Ammonium thiocyanate plus paraquat cation | 2,24 + 0,06 | 97.6 |
| 2 | Ammonium thiocyanate | 0,56 | 50.4 |
| 3 | Ammonium thiocyanate | 1,12 | 52.8 |
| 4 | Ammonium thiocyanate | 2,24 | 51.3 |
| 5 | Ammonium thiocyanate | 4,48 | 70.5 |
| 6 | Ammonium thiocyanate | 8,97 | 73.2 |
| 7 | untreated check | --- | 47.2 |

Levels of 0,56, 1,12 and 2,24 kg per ha of only
ammonium thiocyanate did not give commercially acceptable
levels of defoliation and only moderate levels of defoliation were achieved at levels of 4,48 and 8,97 kg
per ha.     However, the formulation containing both am--
monium thiocyanate and paraquat cation and at levels of only
2,24 and 0,06 kg per ha,     respectively, gave excellent
and unexpectedly superior levels of defoliation. Moreover,
counts of open bolls on the cotton plants at 7, 14 and 21
days after application did not indicate any effect of the
test treatments on boll openings. Similarly, counts of
green bolls did not indicate any delay or other effects of
the treatment. And, yield estimates, based on counts of bolls 21 days after application of test treatments showed no differences between treatments.

## EXAMPLE 3

A flowable formulation similar to Example 2 in prepared employing sodium thiocyanate as the thiocyanate compound of the formulation. The formulation has the following composition:

| Component | Amount |
| --- | --- |
| Sodium thiocyanate | 0,48 g/ml |
| Paraquat | 0,012 g/ml (as cation) |
| Aluminum hydroxide gel (10% $Al_2O_3$ assay) | 18.0 percent by weight |
| Hydroxypropyl guar-Jaguar® HP-8 | 0.5 percent by weight |
| Water | q.s. |

## EXAMPLE 4

A flowable formulation similar to Example 2 in prepared employing magnesium thiocyanate as the thiocyanate compound of the formulation. The formulation has the following composition:

| Component | Amount |
| --- | --- |
| Magnesium thiocyanate | 0,48 g/ml |
| Paraquat | 0,012 g/ml (as cation) |
| Aluminum hydrochloride gel (10% $Al_2O_3$ assay) | 18.0 percent by weight |
| Hydroxypropyl guar-Jaguar® HP-8 | 0.5 percent by weight |
| Water | q.s. |

EXAMPLE 5

A flowable formulation similar to Example 2 in prepared employing quaternary tertiary butyl ammonium thiocyanate as the thiocyanate compound of the formulation. The formulation has the following composition:

| Component | Amount |
|---|---|
| Quaternary tertiary butyl ammonium thiocyanate | 0,48 g/ml |
| Paraquat | 0,012 g/ml (as cation) |
| Aluminum hydroxide gel (10% $Al_2O_3$ (assay) | 18.0 percent by weight |
| Hydroxypropyl guar-Jaguar® HP-8 | 0.5 percent by weight |
| Water | q.s. |

CLAIMS

1.    A formulation for the desiccation and defoliation of crops comprising a solution containing from about 0,006 to about 0,03 g     cation of 1,1'-dimethyl-4,4'-bipyridinium dichloride and from about 0,12 to about 0,96 g of a thiocyanate compound selected from the group consisting of ammonium thiocyanate, a quaternary ammonium thiocyanate, alkali metal thiocyanate and alkaline earth metal thiocyanate per ml     of formulation and wherein the weight ratio of thiocyanate compound to 1,1'-dimethyl-4,4'-bipyridinium dichloride is in the range of from about 10:1 to about 80:1.

2.    The formulation of claim 1 wherein the 1,1'-dimethyl-4,4'-bipyridinium dichloride is present in an amount of from about 0,009 to about 0,018 g cation per ml and the thiocyanate compound is present in an amount of from about 0,36 to 0,72 g per ml and the weight ratio of thiocyanate compound to 1,1'-dimethyl-4,4'-bipyridinium dichloride cation is in the range of from about 30:1 to about 60:1.

3.    The formulation of any of/ wherein the thiocyan-claims 1 and 2 ate compound is selected from the group consisting of ammonium thiocyanate, sodium thiocyanate, magnesium thiocyanate and quarternary tertiary butyl ammonium thiocyanate.

4.    The formulation of claim 3 wherein the thiocyanate compound is ammonium thiocyanate.

5. The formulation of any of claims 1 to 4 wherein there is also present aluminum hydroxide gel in an amount of from about 5 to about 30% by weight based on the weight of the total formulation.

6. The formulation of claim 5 wherein the aluminum hydroxide gel is present in an amount of from about 15 to about 25% by weight.

7. The formulation of any of claims 4, 5 and 6 wherein the 1,1'-dimethyl-4,4'-bipyridinium dichloride is present in an amount of about 0,012 g cation per ml and the ammonium thiocyanate is present in an amount of about 0,48 g per ml.

8. The formulation of claims 4 and 5 wherein the 1,1'-dimethyl-4,4'-bipyridinium dichloride is present in an amount of about 0,012 g cation per ml and the ammonium thiocyanate is present in an amount of about 0,48 g per ml.

9. The formulation of claims 4 and 6 wherein the 1,1'-dimethyl-4,4'-bipyridinium dichloride is present in an amount of about 0,012 g cation per ml and the ammonium thiocyanate is present in an amount of about 0,48 g per ml.

10. The formulation of claim 9 comprising:

| Component | Amount |
|---|---|
| ammonium thiocyanate | 0,48 g/ml |
| 1,1'-dimethyl-4,4'-bipyridinium dichloride | 0,012 g/ml (as cation) |
| aluminum hydroxide gel | 18.0 percent by weight |
| hydroxypropyl guar | 0.5 percent by weight |
| water | q.s. |

11. The formulation of claim 5 comprising:

| Component | Amount |
|---|---|
| sodium thiocyanate | 0,48 g/ml |
| 1,1'-dimethyl-4,4'-bipyridinium dichloride | 0,012 g/ml (as cation) |
| aluminum hydroxide gel | 18.0 percent by weight |
| hydroxypropyl guar | 0.5 percent by weight |
| water | q.s. |

12. The formulation of claim 5 comprising:

| Component | Amount |
|---|---|
| magnesium thiocyanate | 0,48 g/ml |
| 1,1'-dimethyl-4,4'-bipyridinium dichloride | 0,012 g/ml (as cation) |
| aluminum hydroxide gel | 18.0 percent by weight |
| hydroxypropyl guar | 0.5 percent by weight |
| water | q.s. |

13. The formulation of claim 5 comprising:

| Component | Amount |
|---|---|
| quaternary tertiary butyl ammonium thiocyanate | 0,48 g/ml |
| 1,1'-dimethyl-4,4'-bipyridinium dichloride | 0,012 g/ml (as cation) |
| aluminum hydroxide gel | 18.0 percent by weight |
| hydroxypropyl guar | 0.5 percent by weight |
| water | q.s. |

14. A process for the desiccation and defoliation of crops in need thereof comprising applying to said crop a desiccating and defoliating amount of a formulation of claim 1.

- 16 -                                    0038948

15. The process of claim 14 wherein the amount of formulation applied to the crops is an amount of from about 2,34 to about 9,35 1 per ha.

16. A process for the desiccation and defoliation of crops in need thereof comprising applying from about 2,34 to about 9,35 1 per ha    of the formulation of claim 2.

17. A process for the desiccation and defoliation of crops in need thereof comprising applying from about 2,34 to about 9,35 1 per ha    of the formulation of claim 5.

18. A process for the desiccation and defoliation of crops in need thereof comprising applying from about 2,34 to about 9,35 1 per ha    of the formulation of claim 6.

19. A process for the desiccation and defoliation of crops in need thereof comprising applying from about 2,34 to about 9,35 1 per ha    of the formulation of claim 7.

20. A process for the desiccation and defoliation of crops in need thereof comprising applying from about 2,34 to about 9,35 1 per ha    of the formulation of claim 8.

21. A process for the desiccation and defoliation of crops in need thereof comprising applying from about 2,34 to about 9,35 1 per ha    of the formulation of claim 9.

0038948

22.   A process for the desiccation and defoliation of crops in need thereof comprising applying from about 2,34 to about 9,35 l per ha        of the formulation of claim 10.